Europäisches Patentamt

European Patent Office

Office européen des brevets

(19)

(11) **EP 0 742 069 B1**

(12) **FASCICULE DE BREVET EUROPEEN**

(45) Date de publication et mention
de la délivrance du brevet:
**14.07.1999 Bulletin 1999/28**

(51) Int. Cl.$^6$: **B23H 7/10**, B23H 7/06

(21) Numéro de dépôt: **96107579.3**

(22) Date de dépôt: **13.05.1996**

(54) **Dispositif d'usinage par électroérosion**

Elektroerosive Bearbeitungseinrichtung

Device for electrical discharge machining

(84) Etats contractants désignés:
**CH DE ES FR GB LI SE**

(30) Priorité: **11.05.1995 CH 139295**

(43) Date de publication de la demande:
**13.11.1996 Bulletin 1996/46**

(73) Titulaire:
**CHARMILLES TECHNOLOGIES S.A.**
**1217 Meyrin 1 (CH)**

(72) Inventeur: **Drouet, Jérôme**
**1223 Cologny (CH)**

(74) Mandataire: **Weibel, Beat et al**
**c/o Georg Fischer AG,**
**Amsler-Laffon-Strasse 9**
**8201 Schaffhausen (CH)**

(56) Documents cités:
**EP-A- 0 214 295**

• **PATENT ABSTRACTS OF JAPAN vol. 006, no.**
**106 (M-213), 10 mai 1983 & JP 58 028424 A**
**(FUJITSU FANUC KK), 19 février 1983,**

EP 0 742 069 B1

## Description

L'invention a trait à un dispositif pour électroérosion à fil, avec un fil-électrode inclinable par rapport au plan de la trajectoire à découper.

Rappelons que dans la plupart de ces dispositifs, le fil-électrode est tendu et dévidé entre deux guides-fil qui peuvent être de type "fermé" ou "ouvert", c'est-à-dire en forme par example de galets de roulette ou de cylindre, avec une encoche ou rainure périphérique où vient se loger le fil selon un "profil de guidage" donné et située, de préférence, dans un plan perpendiculaire à l'axe de révolution du guide. Par guides "fermés" on entend des guides ayant une symétrie de rotation, généralement en forme d'anneaux, du type des guides-filière ou des guides-canon. La présente invention se rapporte à ces deux types de guides, bien qu'elle soit décrite, pour simplifier, plus particulièrement en relation avec des guides dits "fermés", utilisés actuellement par la demanderesse sur ses diverses machines à fil.

Le fil-électrode se déplace relativement à la pièce à usiner en la découpant par des étincelles érosives éclatant entre le fil et la pièce, selon une trajectoire prédéterminée, située dans un plan, appelé ici "plan principal", perpendiculaire à la partie de fil tendue entre les guides. Ceci permet une "coupe droite", autrement dit le découpage de surfaces dont toutes les génératrices sont perpendiculaires au plan principal.

Pour obtenir des formes plus générales, par exemple des pièces avec dépouille, il est nécessaire d'incliner le fil par rapport à la normale au plan principal (appelée "axe neutre" dans ce qui suit); l'angle d'inclinaison ou "angle de dépouille" peut varier en cours d'usinage, en particulier lors des changements de direction de la trajectoire d'usinage. De nombreuses méthodes ont été proposées pour réaliser cette dépouille: déplacer l'un des guides par rapport à l'autre, parallèlement au plan principal, ou les déplacer chacun selon une trajectoire déterminée, différente pour chacun; ces déplacements peuvent être combinés à divers types de rotation des guides-fil: basculement des deux guides-fil pour les orienter en alignant leur axe de symétrie avec la partie de fil tendue entre les guides et/ou, surtout dans le cas de guides ouverts, rotation dans des plans parallèles au " plan principal", en particulier pour stabiliser le fil dans l'encoche en orientant cette dernière en fonction de la trajectoire d'usinage et surtout pour orienter le plan de cette encoche de manière qu'il contienne la partie de fil tendue entre les guides, comme décrit dans EP 348 534.

C'est soit la pièce qui se déplace, soient les guides-fil, la pièce restant immobile, ceci grâce à un premier système à mouvements croisés selon les axes X et Y. Le guide-fil supérieur est animé selon les axes U et V (qui peuvent être indépendants des axes X et Y et être en fait un deuxième système d'axes X' et Y'), ceci grâce à un deuxième système à mouvements croisés.

Le fil s'incline ainsi par rapport au plan de la trajectoire réalisant une découpe conique à travers la pièce.

Lorsqu'on prévoit d'usiner avec de grands angles d'inclinaison, les guides classiques, qu'ils soient fermés ou ouverts, présentent certains inconvénients qui tendent à réduire leur précision. Ce manque de précision a deux causes principales: d'abord les contraintes infligées au fil lorsqu'il change de direction à la sortie du guide supérieur et à l'entrée dans le guide inférieur, et également sa rigidité:

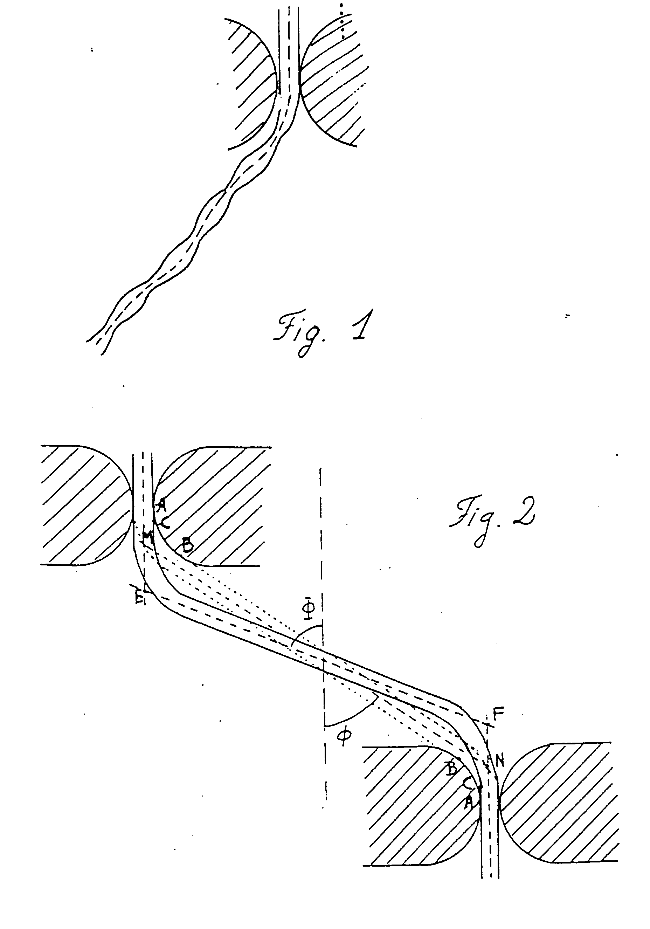

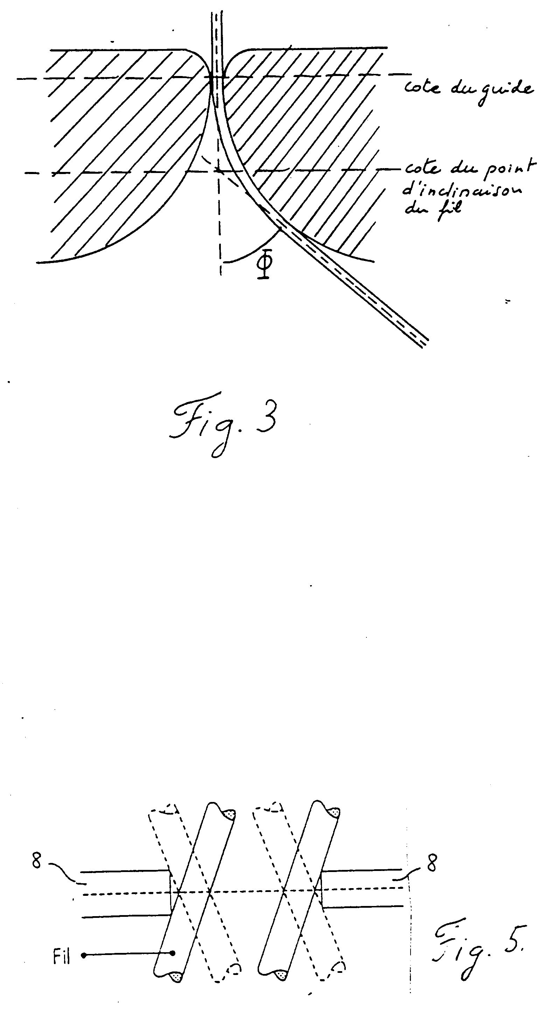

- en imprimant au fil un brusque changement de direction tandis qu'il est serré contre la surface de référence du guide, le profil de guidage des guides classiques lui fait subir des contraintes qui sont d'autant plus fortes que le rayon de courbure de ce profil est plus petit; elles sont suffisantes (et de manière surprenante, quelque soit l'angle d'inclinaison, ou de "dépouille") pour faire entrer le fil en zone de déformation plastique. On observe alors un fluage et une striction (voir Fig.1): le fil ondule à la sortie des guides et présente des variations de diamètre; le risque de rupture du fil est important et conduit à diminuer la vitesse d'usinage, de moitié, par exemple, lorsqu'on usine avec un angle de 30° ou plus.
- l'une des conséquences de la rigidité du fil est illustrée à la Fig.2: la partie de fil tendue entre les guides n'est pas parfaitement linéaire, même sous forte tension mécanique; au lieu de rester appliqué au profil de guidage le long de l'arc délimité par les points théoriques de tangence, appelés A et B à la Fig.2, le fil s'en écarte assez rapidement (point C); de plus il s'incurve plus ou moins légèrement, selon son élasticité et la tension mécanique à laquelle il est soumis; il y a ainsi une déviation du trajet réel (segment EF) du fil entre les guides par rapport au trajet théorique (segment MN), l'angle d'inclinaison réel $\Phi$ étant différent de l'angle d'inclinaison théorique $\phi$, d'où une non-conformité de la surface découpée sur la pièce.

Il n'existe aucun moyen connu pour pallier les défauts dus à la déformation plastique, et on se contentait de choisir pour le fil un matériau aussi "mou" que possible c'est-à-dire présentant la meilleure résistance à cette déformation plastique. L'erreur de position du point de référence des guides pourrait être corrigée en repositionnant ces derniers et, dans une certaine mesure, en agissant sur la tension mécanique du fil, mais le gros problème est que ces deux types de défauts sont difficilement contrôlables, car fonction des propriétés mécaniques du fil; or ces dernières se modifient au cours de l'usinage car elles sont fonction de la température du fil et cette dernière varie constamment, en particulier suite aux variations de courant d'usinage et de la pression d'injection du liquide irriguant la zone d'usinage. De plus, l'angle d'inclinaison et la tension mécanique du fil peuvent varier intentionellement au cours de l'usinage, ce qui fait évoluer ces défauts, complique encore leur contrôle et rend donc leur correction inenvisageable dans l'état actuel de la technique.

De plus, la cote des points d'inclinaison du fil dans les guides varie selon la valeur de l'angle d'inclinaison, ceci que l'on considère les points et l'angle théoriques M, M et $\phi$ ou les points et l'angle réels E, F et $\Phi$ de la Fig. 2. Cette troisième cause de défaut est toutefois négligeable dans le cas des guides classiques, ayant un rayon de courbure allant en général de 0,5 à 1 mm, ce déplacement n'étant alors que de l'ordre de 50$\mu$.

L'objet de la présente invention est une machine d'électroérosion équipée de guides-fil profilés de manière à réduire et même supprimer la déformation plastique du fil-électrode. Comme défini à la revendication 1, il s'agit de guides-fil présentant un profil de guidage à grand rayon de courbure, ce qui permet au fil de rester en zone élastique.

Un deuxième objet de la présente invention est une machine d'électroérosion équipée de moyens pour effectuer un cycle de mesures, de préférence automatiques, destiné à déterminer la cote d'au moins l'un des points d'inclinaison du fil, (ou d'une autre grandeur apparentée), pour chaque valeur de l'angle de dépouille, la cote de référence des guides restant inchangée. Ce cycle va permettre de corriger la programmation du déplacement relatif de l'un ou des deux guides-fil en déterminant la cote réelle des points d'inclinaison du fil. Il permet accessoirement de calculer la valeur exacte du rayon de courbure du profil de guidage d'un guide-fil selon la présente invention.

Alors que le profil de guidage des guides classiques a un rayon de courbure de l'ordre de 0,5 à 1 mm environ, qu'il s'agisse de guides fermés ou ouverts, celui des guides de la présente invention est supérieur à 1,5 mm; il est en général de l'ordre de quelques millimètres pour les fils-électrode commercialisés actuellement. Le rayon approprié peut être choisi en fonction de la section du fil et de son coefficient d'allongement, grâce par example, à la formule suivante:

$$\frac{\Delta L}{L} = \frac{r}{r + R}$$

dans laquelle r désigne le rayon du fil, R le rayon de courbure du profil de guidage et $\Delta L/L$ le coefficient d'allongement correspondant à la limite de déformation élastique du fil considéré.

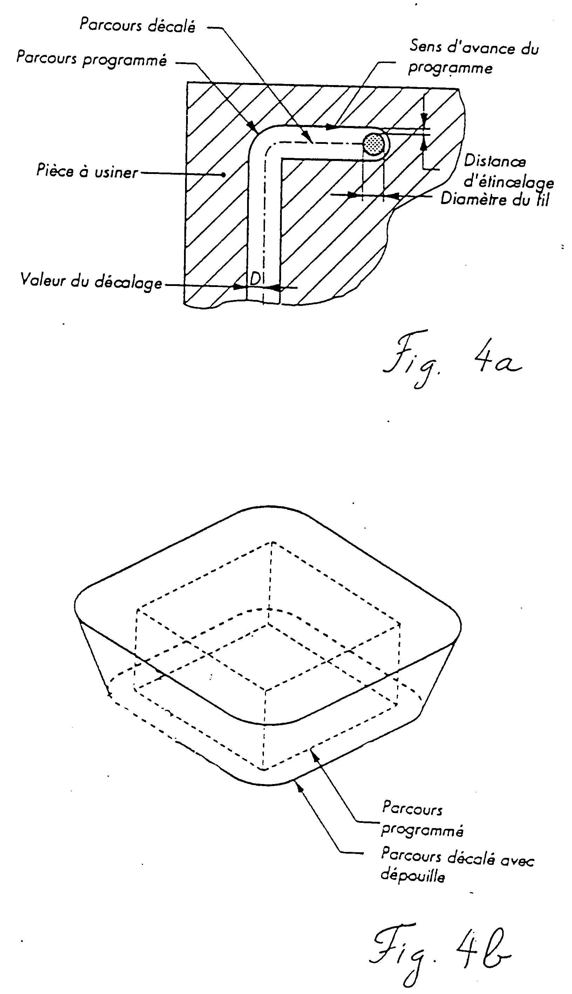

Ainsi pour un fil avec un coefficient d'allongement élastique de 2% et ayant un diamètre de 0,2 mm, on choisira un guide avec un rayon de courbure d'environ 5 mm. Un exemple de guide fermé selon l'invention est illustré à la Fig. 3.

Il est important de remarquer que les guides selon la présente invention présentent une forme de révolution quasi parfaite et un profil de guidage avec un rayon de courbure quasi constant. Les coordonnées des points d'inclinaison du fil selon les axes X, Y et U, V ou X', Y', restent par conséquent invariantes; l'avantage est qu'il ne reste donc plus qu'à tenir compte du déplacement vertical de ces points.

Il est non seulement important que chacun des guides ait un profil de guidage avec un rayon de courbure quasi constant, mais aussi que ce rayon soit le même pour les deux guides. Ces derniers sont donc, de préférence, appariés lors de leur fabrication.

Mais avec de tels rayons de courbure, le déplacement vertical des points d'inclinaison du fil dans les guides en fonction de l'angle d'inclinaison n'est plus négligeable (de l'ordre de 100$\mu$, par exemple avec un rayon de 5 mm et une dépouille de 30°). C'est pourquoi la demanderesse a eu l'idée de corriger la programmation du déplacement relatif de ces guides-fil afin de tenir compte du changement de cote de leur plan de référence chaque fois qu'on fait varier l'angle de dépouille.

Des formules mathématiques existent, qui permettraient de calculer les distances des points d'inclinaison des guides au plan de référence machine, connaissant la distance entre les plans de référence des guides, la cote d'au moins l'un de ces guides, l'angle d'inclinaison et le rayon de courbure. Mais si on est sûr que les guides selon la présente invention présentent une forme de révolution quasi parfaite et un profil de guidage avec un rayon de courbure quasi constant, on ne connait pas ce rayon avec assez de précision. C'est pourquoi la demanderesse a prévu les moyens d'effectuer un cycle automatique de mesures pour déterminer la cote des points d'inclinaison du fil pour différentes valeurs de l'angle d'inclinaison, sans modifier la cote verticale des guides.

Avant de décrire à titre d'exemple l'un des modes d'exécution possibles des cycles de mesures définis à la revendication 3, rappelons les éléments suivants, valables pour la plupart des machines d'électroérosion à fil à commande numérique.

Les axes X et Y sont les axes du mouvement relatif entre la pièce à usiner et le guide inférieur, par exemple ceux de la table à mouvements croisés supportant soit la pièce à usiner et son système de bridage (lorsque la pièce est mobile), soit le guide inférieur (lorsque la pièce est fixe). Les axes U et V sont les axes de la table à mouvements croisés supportant le guide-fil supérieur; ils permettent d'incliner le fil et sont parallèles aux axes X et Y. L'axe Z gère le déplacement vertical du guide-fil supérieur (et permet de s'adapter aux différentes hauteurs de pièce à usiner.,

La machine possède un système d'axes fixes, absolus, définis sur certains types de machines par des capteurs optiques ou des règles installés sur la machine; il est immuable, car la position des références sur les règles ne change pas.

Un système d'axes modifiables, dits "axes machine" est défini par l'opérateur , tandis que le parcours d'usinage, ou chemin d'outil, est en général programmé selon un autre système d'axes modifiables, dits "axes pièce". Le contour de la trajectoire ou de la surface à découper est décomposé en une suite de segments droits ou courbes, et un programme définit leurs coordonnées linéaires ou courbes ainsi que les conditions d'usinage associées à chacun de ces segments sous forme d'un "bloc" d'instructions.

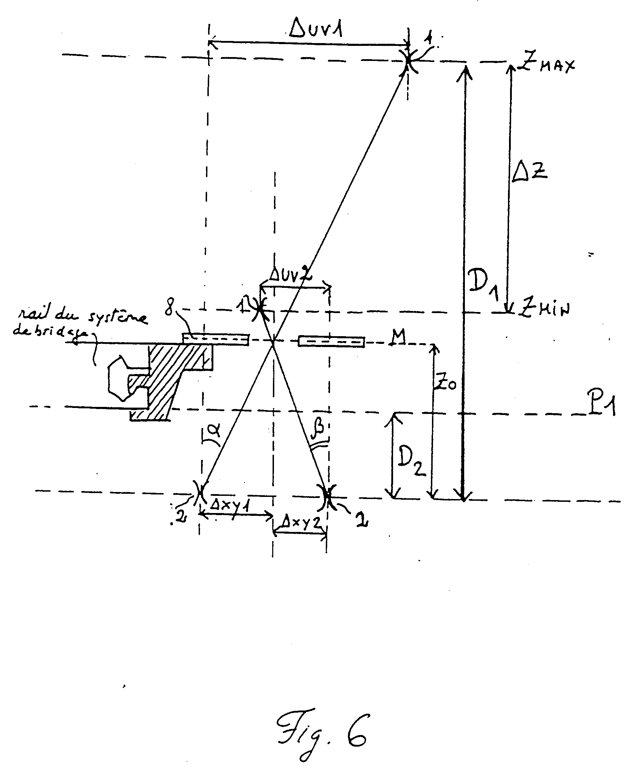

Une commande peut permettre de déplacer la buse d'injection et le guide-fil supérieur le long de l'axe Z afin de les positionner en fonction de la hauteur de la pièce à usiner. Certaines commandes numériques ont un premier logiciel permettent de décaler le parcours du fil par rapport au contour de la trajectoire à découper et/ou un second logiciel permettant de déplacer les axes U, V pour réaliser la dépouille désirée (voir Fig. 4a et 4b).

Dans cet example de cycle de mesure selon la présente invention, qui n'est qu'une variante particulière, les opérations suivantes peuvent être effectuées manuellement, par example avec la télécommande et le panneau avant de l'armoire électrique de la machine; il peut aussi avantageusement être effectué automatiquement, en utilisant un mot de commande inséré par exemple dans le programme.

Les mesures sont effectuées selon le principe des touches électriques, bien connu dans l'état de la technique, qui permet de détecter la position d'un obstacle venant en contact avec le fil parcouru par un courant grâce à l'apparition d'un court-circuit (voir Figh. 5). Les mesures sont réalisées de préférence dans les conditions de l'usinage: vitesse de déroulement et tension mécanique du fil correctes; dans le cas d'usinage en immersion, bac de travail plein, eau correctenent desionisée et thermostabilisée; l'oeilleton de mesure 8 est dégraissé, démagnétisé et aligné avec soin avec le plan de référence machine P1.

Une fonction de la commande numérique de la machine à fil, associée à des dispositifs de mesure et de calcul, détermine la position des guides-fil en mesurant et calculant:

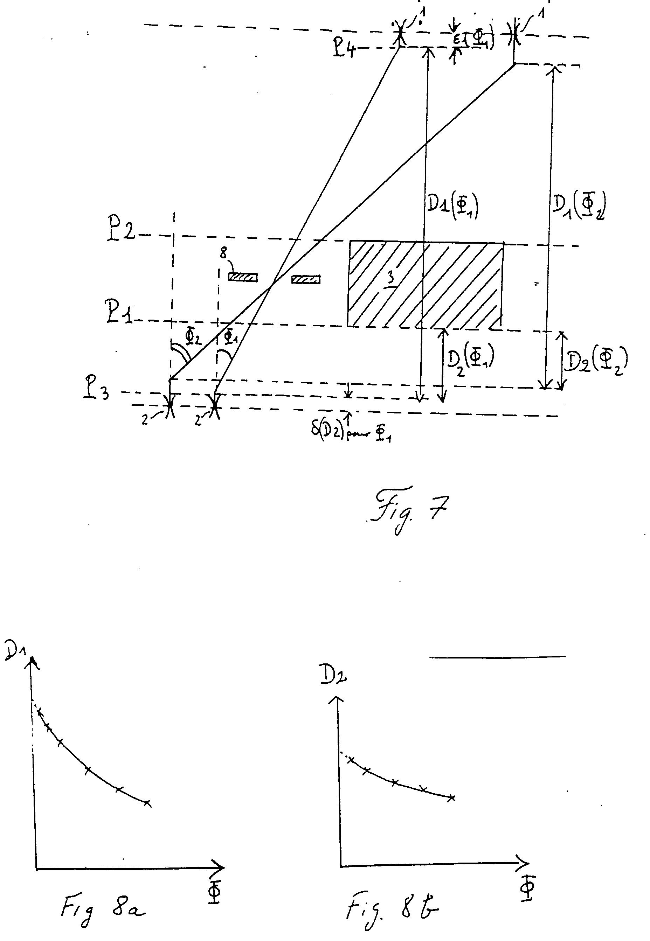

1) la distance D1 entre les cotes des deux guides 1 et 2 et
2) la distance D2 entre la cote du guide inférieur 2 et le plan de référence machine (voir Fig. 6), pour une cote de ce plan de référence et une épaisseur d'oeilleton donnés, effectuant ainsi ce qui est appelé un "réglage des guides". La distance D1 est obtenue en déterminant $\delta Z$, la différence entre la cote 0 absolue et la cote 0 machine. Ceci permet à la commande numérique de déplacer les guides de manière à respecter l'angle de dépouille et le parcours d'usinage programmé dans les blocs d'instructions.

Ce cycle de "réglage des guides" comporte les étapes suivantes :

- un alignement et un centrage du fil (réalisé par touches électriques dans les 4 directions), de manière à ce qu'il soit perpendiculaire au plan de référence et passe au centre de l'oeilleton;

- on amène le guide supérieur en position haute (cote Zmax) et après avoir incliné le fil d'un angle donné, 1° dans cet exemple, et l'avoir centré dans l'oeilleton en déplaçant le guide supérieur d'une quantité connue $\Delta uv$; on lit le déplacement $\Delta xy$ du guide inférieur; ceci permet de calculer approximativement $\delta Z'$:

$$\delta Z' = Zmax - (Zo \times \Delta uv)/\Delta xy$$

Zo étant la différence entre la cote du guide inférieur 2 et celle de l'oeilleton, afin de pouvoir amener le guide supérieur en position basse (cote Zmin) sans risquer une collision avec l'oeilleton;

- on laisse le guide supérieur en position haute et on incline le fil d'un côté de l'axe neutre, d'un angle $\alpha$ choisi par l'opérateur, on centre le fil et on lit le déplacement $\Delta xy$ du guide inférieur ; on incline le fil de l'autre côté de l'axe neutre, toujours de l'angle $\alpha$ et, après centrage, on lit le déplacement $\Delta xy$ du guide inférieur; on répète ces opérations dans les directions perpendiculaires puis on calcule la valeur moyenne $\Delta xy1$ des déplacements du guide inférieur correspondant au déplacement $\Delta uv1$ du guide supérieur (Fig. 6); puis on amène le guide supérieur an position basse et on répète les deux opérations ci-dessus avec un angle d'inclinaison $\beta$ qui est en général très peu différent de l'angle $\alpha$; on obtient une valeur moyenne $\Delta xy2$ pour le déplacement du guide inférieur correspondant au déplacement $\Delta uv2$ du guide supérieur;

- ceci permet de calculer la valeur exacte de D1 et de D2:

$$D1 = \Delta z \frac{\Delta uv1 \times \Delta xy2}{\Delta uv1 \times \Delta xy2 - \Delta uv2 \times \Delta xy1}$$

$\Delta z$ étant la différence entre les cotes Zmax et Zmin des positions haute et basse du guide supérieur 1, et:

$$D2 = D1 \times \frac{\Delta xy1}{\Delta uv1} - Zo$$

Zo étant la cote de l'oeilleton. On admet que la cote 0 est celle du guide inférieur.

Selon la présente invention, on commande un "réglage des guides" pour différentes valeurs de l'angle de dépouille $\Phi$. Dans cet exemple, ces valeurs sont 3°, 5°, 10°, 15° et 20°.

Les valeurs D1 obtenues pour les différents angles de dépouille sont en fait les différentes distances entre les cotes des points d'inclinaison du fil dans les deux guides 1 et 2 (voir Fig. 7).

La pièce à usiner 3 est en général alignée de manière que sa face inférieure, encore appelée "posage", soit confondue avec le plan de référence machine P1; sa face supérieure peut être contenue dans un plan P2 dit "plan secondaire".

Puis une unité de calcul mémorise les valeurs obtenues pour D1 et D2 et établi les courbes correspondant à leur variation en fonction de l'angle de dépouille $\Phi$, qui est l'angle réel (voir Fig. 8a et 8b).

Pour calculer la cote des points d'inclinaison à 0°, on peut extrapoler les courbes obtenues ou approximer à la dernière valeur obtenue par mesure et calcul, par exemple à 3°.

La commande numérique utilise ensuite ces courbes pour déterminer les distances D1 et D2 correspondant aux valeurs de l'angle de dépouille $\Phi$ indiquées dans les blocs d'instruction du programme. Elle en déduit, ceci en temps réel, les mouvements UV et XY des guides, en projetant les coordonnées des segments de trajectoire sur les plans P3 et P4 contenant les points d'inclinaison du fil. La commande numérique peut effectuer cette correction en temps réel, pour chaque bloc d'instructions.

Cette façon de déterminer les divers plans des points d'inclinaison du fil correspondant à divers angles d'inclinaison, a été décrite à titre d'exemple, en se référant à l'un des types de machine à fil de la demanderesse; mais elle peut varier de machine à machine, selon les divers systèmes de référence utilisés, les architectures des commandes numériques, les dispositifs de réglage et de mesures prévus.

Ainsi, l'oeilleton à touche électrique décrit ci-dessus peut être remplacé par tout autre dispositif, à touche électrique ou non, connu dans l'état de la technique.

Dans certains cas, en particulier lorsque les guides supérieur et inférieur ont une géométrie quasi identique, on peut admettre que $\delta(D2) = \varepsilon$, ou comme $\delta(D1) = \delta(D2) + \varepsilon$, $\delta(D1) = 2 \times \delta(D2)$ (voir Fig. 7). Il est donc possible de simplifier les cycles de mesure et la procédure de correction en ne calculant et mémorisant que l'une des grandeurs D1 ou D2.

On peut aussi simplifier les mesures de centrage en n'effectuant par exemple les touches électriques que sur la face supérieure (ou inférieure) de l'oeilleton (aux points Q et R de la Fig. 6a), ce qui réduit les opérations de moitié; dans ce cas, le centrage ne s'effectue plus dans le plan M médian de l'oeilleton, mais dans celui de sa face supérieure. On peut aussi n'effectuer les mesures de centrage par touches électriques que dans deux direction d'unh même plan et renoncer aux mesures dans le plan perpendiculaire; ceci permet aussi de réduire les opérations de moitié.

Il est remarquable que ce cycle permette de pallier, non seulement le défaut dû au déplacement vertical des points d'inclinaison du fil dans les guides lorsqu'on modifie l'angle d'inclinaison, mais aussi le défaut dû à l'erreur sur la position du point de tangence des guides suite à la rigidité du fil, puisque ce cycle donne la cote des points d'inclinaison réels; les points théoriques de tangence n'interviennent donc plus.

La présente invention permet donc d'améliorer de manière très significative la précision des découpes, surtout dans le cas de découpes à dépouille variable. Elle permet surtout une remarquable répétabilité de l'usinage. Par exemple, dans le cas d'un ensemble poinçon-matrice en forme d'étoile avec un angle de dépouille de 9°, le poinçon peut s'adapter dans la matrice dans n'importe quelle position des branches de l'étoile, avec une différence de cote de 0 à 5μ, au lieu de 0 à 100 μ lorsqu'on n'utilise pas les guides et le système de correction de la présente invention. Signalons qu'elle permet aussi une excellente précision de l'angle de dépouille: l'erreur est de 4 à 9μ au lieu de 20 à 120 μ lorsqu'on n'utilise pas la présente invention.

## Revendications

1. Dispositif d'électroérosion avec une électrode-fil tendue et dévidée entre deux guides-fil, comportant des moyens pour incliner cette électrode-fil par rapport à l'axe neutre, de manière à faire varier, si désiré, l'angle d'inclinaison en cours d'usinage, caractérisé par des guides-fil avec un profil de guidage dont le rayon de courbure est au moins égal à une valeur RL donnée par la formule suivante

$$\frac{\Delta L}{L} = \frac{r}{r + RL}$$

dans laquelle r désigne le rayon du fil et $\Delta L/L$ le coefficient d'allongement correspondant à la limite de déformation élastique de l'électrode-fil considérée.

2. Dispositif selon la revendication 1, dans lequel le rayon de courbure des deux guides-fil est quasi identique.

3. Dispositif selon la revendication 1, comportant de plus des moyens de mesure et de calcul pour déterminer, en fonction d'un angle d'inclinaison donné, la cote des deux points d'inclinaison de l'électrode-fil dans les guides-fil.

4. Dispositif selon la revendication 3, dans lequel les moyens de mesure et de calcul sont programmés pour effectuer des cycles de mesure et de calcul donnant la variation de la différence entre les cotes verticales des deux points d'inclinaison de l'électrode-fil dans les guides-fil, en fonction de l'angle d'inclinaison de l'électrode-fil et mémorisant cette variation.

5. Dispositif selon la revendication 3, dans lequel les moyens de mesure et de calcul sont programmés pour effectuer des cycles de mesure et de calcul donnant la variation de la différence entre la cote verticale du point d'inclinaison de l'électrode-fil dans le guide-fil inférieur et la cote du plan de référence, en fonction de l'angle d'inclinaison de l'électrode-fil et mémorisant cette variation.

6. Dispositif selon la revendication 3, dans lequel les moyens de mesure et de calcul sont programmés pour effectuer des cycles de mesure et de calcul donnant la variation de la différence entre la cote verticale du point d'inclinaison de l'électrode-fil dans le guide-fil supérieur et la cote du plan de référence secondaire, en fonction de l'angle d'inclinaison de l'électrode-fil et mémorisant cette variation.

7. Dispositif selon la revendication 3, dans lequel les moyens de de mesure et de calcul sont reliés à la commande numérique d'une machine d'électroérosion électrique, de manière à permettre à cette dernière de contrôler les mouvements des guides-fil en temps réel, en tenant compte de l'évolution de la position verticale réelle des points d'inclinaison de l'électrode-fil dans les guides-fil par rapport aux plan de référence de la machine, cette position variant avec l'angle d'inclinaison de l'électrode-fil.

**Claims**

1. Device for electrical discharge machining using a tensioned electrode wire payed out between two wire guides, which comprises means for inclining this electrode wire with respect to the neutral axis so as to vary, if desired, the angle of inclination during machining, characterized by wire guides having a guiding profile whose radius of curvature is at least equal to a value RL given by the following formula

$$\frac{\Delta L}{L} = \frac{r}{r + RL}$$

in which r denotes the radius of the wire and $\Delta L/L$ denotes the coefficient of elongation corresponding to the elastic deformation limit of the electrode wire in question.

2. Device according to Claim 1, in which the radius of curvature of the two wire guides is virtually identical.

3. Device according to Claim 1, furthermore comprising measurement and calculation means for determining, as a function of a given angle of inclination, the coordinate of the two points of inclination of the electrode wire in the wire guides.

4. Device according to Claim 3, in which the measurement and calculation means are programmed to carry out measurement and calculation cycles giving the variation in the difference between the vertical coordinates of the two points of inclination of the electrode wire in the wire guides, as a function of the angle of inclination of the electrode wire, and storing this variation in memory.

5. Device according to Claim 3, in which the measurement and calculation means are programmed to carry out measurement and calculation cycles giving the variation in the difference between the vertical coordinate of the point of inclination of the electrode wire in the lower wire guide and the coordinate of the reference plane, as a function of the angle of inclination of the electrode wire, and storing this variation in memory.

6. Device according to Claim 3, in which the measurement and calculation means are programmed to carry out measurement and calculation cycles giving the variation in the difference between the vertical coordinate of the point of inclination of the electrode wire in the upper wire guide and the coordinate of the secondary reference plane, as a function of the angle of inclination of the electrode wire, and storing this variation in memory.

7. Device according to Claim 3, in which the measurement and calculation means are linked to a numerical control of an electrical electrical discharge machine, so as to allow the latter to control the movements of the wire guides in real time, taking into account the change in the actual vertical position of the points of inclination of the electrode wire in the wire guides with respect to the reference plane of the machine, this position varying with the angle of inclination of the electrode wire.

**Patentansprüche**

1. Elektroerosive Einrichtung mit einer zwischen zwei Drahtführungen gespannten und abgewickelten Drahtelektrode, welche Mittel zum Neigen dieser Drahtelektrode bezüglich der Nullinie umfaßt, so daß, falls gewünscht, eine Änderung des Neigungswinkels während der Bearbeitung bewirkt wird, gekennzeichnet durch Drahtführungen mit einem Führungsprofil, dessen Krümmungsradius wenigstens gleich einem Wert RL ist, welcher durch die folgende Formel

$$\frac{\Delta L}{L} = \frac{r}{r + RL}$$

gegeben ist, in der r den Radius des Drahtes und $\Delta L/L$ den der Grenze der elastischen Verformung der betrachteten Drahtelektrode entsprechenden Dehnungskoeffizienten bezeichnet.

2. Einrichtung nach Anspruch 1, bei der der Krümmungsradius der beiden Drahtführungen praktisch identisch ist.

3. Einrichtung nach Anspruch 1, welche außerdem Meß- und Berechnungsmittel umfaßt, um in Abhängigkeit von einem gegebenen Neigungswinkel das Maß der zwei Neigungspunkte der Drahtelektrode in den Drahtführungen zu bestimmen.

4. Vorrichtung nach Anspruch 3, bei der die Meß- und Berechnungsmittel so programmiert sind, daß sie Meß- und Berechnungszyklen ausführen, welche die Änderung der Differenz zwischen den vertikalen Maßen der zwei Neigungspunkte der Drahtelektrode in den Drahtführungen in Abhängigkeit vom Neigungswinkel der Drahtelektrode liefern und diese Änderung speichern.

5. Vorrichtung nach Anspruch 3, bei der die Meß- und Berechnungsmittel so programmiert sind, daß sie Meß- und Berechnungszyklen ausführen, welche die Änderung der Differenz zwischen dem vertikalen Maß des Neigungspunktes der Drahtelektrode in der unteren Drahtführung und dem Maß der Bezugsebene in Abhängigkeit vom Neigungswinkel der Drahtelektrode liefern und diese Änderung speichern.

6. Vorrichtung nach Anspruch 3, bei der die Meß- und Berechnungsmittel so programmiert sind, daß sie Meß- und Berechnungszyklen ausführen, welche die Änderung der Differenz zwischen dem vertikalen Maß des Neigungspunktes der Drahtelektrode in der oberen Drahtführung und dem Maß der sekundären Bezugsebene in Abhängigkeit vom Neigungswinkel der Drahtelektrode liefern und diese Änderung speichern.

7. Vorrichtung nach Anspruch 3, bei der die Meß- und Berechnungsmittel mit der numerischen Steuerung einer elektrischen Elektroerosionsmaschine verbunden sind, derart, daß sie dieser letzteren ermöglichen, die Bewegungen der Drahtführungen in Echtzeit zu steuern, unter Berücksichtigung der Änderung der tatsächlichen vertikalen Position der Neigungspunkte der Drahtelektrode in den Drahtführungen bezüglich der Bezugsebenen der Maschine, da sich diese Position mit dem Neigungswinkel der Drahtelektrode ändert.

Fig. 1

Fig. 2

cote du guide

cote du point
d'inclinaison
du fil

Φ

*Fig. 3*

8           8

Fil

*Fig. 5.*

Parcours décalé

Parcours programmé

Sens d'avance du programme

Pièce à usiner

Distance d'étincelage

Diamètre du fil

Valeur du décalage

D

*Fig. 4a*

Parcours programmé

Parcours décalé avec dépouille

*Fig. 4b*

10

Fig. 6

Fig. 7

Fig 8a

Fig. 8b